Europäisches Patentamt

European Patent Office

Office européen des brevets

(19)

(11) Veröffentlichungsnummer: **0 235 616**
**B1**

(12) **EUROPÄISCHE PATENTSCHRIFT**

(45) Veröffentlichungstag der Patentschrift: **05.09.90**

(51) Int. Cl.⁵: **B 60 J 7/08**

(21) Anmeldenummer: **87101696.0**

(22) Anmeldetag: **07.02.87**

(54) Umrüstbarer Kraftwagen.

(30) Priorität: **01.03.86 DE 3606759**

(43) Veröffentlichungstag der Anmeldung:
**09.09.87 Patentblatt 87/37**

(45) Bekanntmachung des Hinweises auf die
Patenterteilung:
**05.09.90 Patentblatt 90/36**

(84) Benannte Vertragsstaaten:
**AT BE CH DE ES FR GB GR IT LI LU NL SE**

(56) Entgegenhaltungen:
**WO-A-85/00327**
**CH-A- 650 980**
**DE-A-3 210 971**
**DE-C-3 317 603**
**DE-U-8 415 331**
**US-A-2 971 794**
**US-A-3 169 792**

(73) Patentinhaber: **KAMEI GmbH & Co. KG**
**Bodenstedtstrasse 4**
**D-6200 Wiesbaden (DE)**

(72) Erfinder: **Meier-Andrae, Uwe**
**Bodenstedtstrasse 4**
**D-6200 Wiesbaden (DE)**

(74) Vertreter: **Nix, Frank Arnold, Dr.**
**Kröckelbergstrasse 15**
**D-6200 Wiesbaden (DE)**

Courier Press, Leamington Spa, England.

**Beschreibung**

Die vorliegende Erfindung bezieht sich auf einen umrüstbaren Kraftwagen nach dem Oberbegriff des Schutzanspruchs 1, wie er aus dem DE-GM 84 15 331 oder der DE-OS 32 10 971 bekannt ist.

Bei der aus DE-GM 84 15 331 bekannten Ausbildung kann ein hinteres starres Dachteil, das dem Fahrzeug einen Kombiaufbau verleiht, abgenommen werden, so daß das Fahrzeug dann als Kleinlaster (Pickup) dienen kann. In dieser Ausbildung ist jedoch die verbleibende Fahrgastzelle hinten offen. Außerdem ist keine Möglichkeit gegeben, das Fahrzeug in eine verwandlungsfähige Version umzurüsten, in der es mit wenig Handgriffen aus einer Kabriolett- oder Landaulettkonfiguration in eine sogenannte Hardtopkonfiguration verwandelt werden kann, in der die gesamte Fahrgastzelle starr überdacht ist. Zwar soll in einer der Aufbaumöglichkeiten eine im hinteren Fahrzeugbereich befestigbare Kofferraumklappe mit einem Faltverdeck verbunden sein, jedoch hat ein solches wieder die ihm eigenen Nachteile, insbesondere die der mangelhaften Witterungsbeständigkeit und Festigkeit. Überdies ist die das Faltverdeck tragende Kofferraumklappe ein kompliziertes und empfindliches Teil.

Die aus der DE-OS 32 10 971 bekannte Ausbildung bietet zwar die Möglichkeit der Umrüstung in eine Kleinlasterversion mit geschlossener Fahrgastzelle, nämlich durch Anordnung einer hinter dem B-Pfosten anzubringenden Fahrerhausrückwand, wobei der rückärtige Fahrzeugbereich als Ladefläche freibleibt, jedoch ist hier von vornherein keine Möglichkeit vorgesehen, in einer der Aufbauversionen einen Wechsel zwischen offenem Fahrgastraum und geschlossener Fahrgastzelle vornehmen zu können.

Aufgabe der Erfindung ist es, ein Fahrzeug zu schaffen, das vom Benutzer mit wenig Aufwand in eine Mehrzahl von grundsätzlich verschiedenen Versionen umgerüstet werden kann, insbesondere in eine Kombifahrzeugversion, eine Kleinlasterversion (Pickupversion) und darüber hinaus in einer weiteren dieser Versionen mit wenigen Handgriffen aus einer Kabriolett- oder Landaulettkonfiguration in eine Hardtopfiguration und umgekehrt verwandelt werden kann.

Die Lösung der gestellten Aufgabe gelingt erfindungsgemäß durch die im Schutzanspruch 1 genannten Merkmale.

An sich ist es aus der DE-PS 33 17 603 bekannt, ein um eine etwa hinter den Rückenlehnen der Sitze angeordnete Achse schwenkbares starres Dachelement sowie eine um ihren hinteren Rand schwenkbare Heckabdeckung vorzusehen, wobei zur Verwandlung des Fahrzeugs in eine Kabriolettkonfiguration das Dachelement in den Raum unterhalb der Heckabdeckung weggeschwenkt werden kann, jedoch ist dies hier die einzige Variations- möglichkeit, und es ist insbesondere nicht vorgesehen, auch noch grundsätzlich andere Aufbauvarianten zu verwirklichen. Somit handelt es sich hier von vornherein nicht um ein umrüstbares Fahrzeug, bei dem dem Besitzer verschiedene Heckaufbauten zur wahlweisen Anbringung zur Verfügung stehen.

Bei der vorliegend vorgeschlagenen erfindungsgemäßen Ausbildung ist wegen der leichten Lösbarkeit auch des das schwenkbare starre Dachelement aufweisenden Heckaufbaus die Möglichkeit geschaffen, daß der Fahrzeugbesitzer mit den ihm in seiner Garage zur Verfügung stehenden Mitteln ganz verschiedene Varianten des Fahrzeugs aufbaut und dabei auch eine Variante, welche mit wenigen Handgriffen, insbesondere also auch unterwegs, die an sich bekannte Verwandlung aus einem Hardtopfahrzeug in ein Kabriolett oder Landaulett erlaubt.

Weitere Erfindungsausgestaltungen sind in den Unteransprüchen angegeben. Die in Anspruch 2 vorgeschlagene Verwendung von Ankerplatten ist deshalb von besonderer Bedeutung, weil es dadurch entbehrlich wird, bei der jeweiligen Montage der Kabrio-/Hardtop-Variante die Gelenkverbindungen aufzubauen; diese sind vielmehr in der bleibenden Verbindung zwischen den Schwenkteilen — Dachelement und Heckabdeckung — und den zugehörigen Ankerplatten vorgegeben, und die Ankerplatten ihrerseits können leicht, schnell und zuverlässig in Position gebracht und arretiert werden.

Eine besonders positionsgenaue Halterung der Ankerplatten des Dachelements ergibt sich aus Ansprüchen 3 und 4.

Das gleiche gilt für die Befestigung der Ankerelemente der Heckabdeckung gemäß Ansprüchen 6 bis 8, wobei hier auch nach die beim Hochschwenken und Herunterdrücken wirksam werdenden Kräfte und Kippmomente besonders zuverlässig aufgefangen werden, die von der gemäß Anspruch 9 zweckmäßigen Gasdruckfeder erzeugt werden.

Die in Anspruch 10 vorgeschlagene Verriegelung der Heckabdeckung in ihrer heruntergeschwenkten Schließstellung ist organisch mit den ohnehin notwendigen Teilen — den Ankerplatten des Dachelements — kombiniert und erlaubt aufgrund der in den Ansprüchen 11 und 12 vorgeschlagenen kinematischen Verbindung der beiden Verriegelungsschlösser deren gleichzeitige Betätigung von einer Seite her.

Die durchweg zur Herstellung der lösbaren Verbindungen verwendeten federbeaufschlagten Knebelverschlüsse ergeben einen spielfreien Anschluß, der zudem beim Kuppeln von Teilen, zwischen denen Dichtungsstreifen oder -profile eingelegt sind, diese zusammenziehen und dadurch zur guten Abdichtungswirkung beitragen.

Die Erfindung wird nachfolgend durch die Beschreibung von Ausführungsbeispielen anhand der beigegebenen Zeichnungen weiter erläutert. Es zeigt:

Fig. 1 das Basisfahrzeug ohne ergänzenden Heckaufbau;

Fig. 2 das Fahrzeug mit einem starren Dachaufbau als Kombi-Pkw;

Fig. 3 den starren Kombidachaufbau für sich;

Fig. 4 einen Knebelverschluß;

Fig. 5 das Fahrzeug mit noch nicht vollständig in Position gebrachtem Ladebehälter als Kleinlaster (Pickup);

Fig. 6 das Fahrzeug mit einem Verwandlungs-Heckaufbau in der geschlossenen Hardtopfiguration;

Fig. 7 das Fahrzeug gemäß Fig. 6 während einer Verwandlung;

Fig. 8 die lösbare Schwenkbefestigung des Dachelements des Verwandlungs-Heckaufbaus;

Fig. 9 die Schwenkkinematik der Heckabdeckkung des Verwandlungs-Heckaufbaus;

Fig. 10 das Fahrzeug mit dem Verwandlungs-Heckaufbau in der offenen Landaulettkonfiguration.

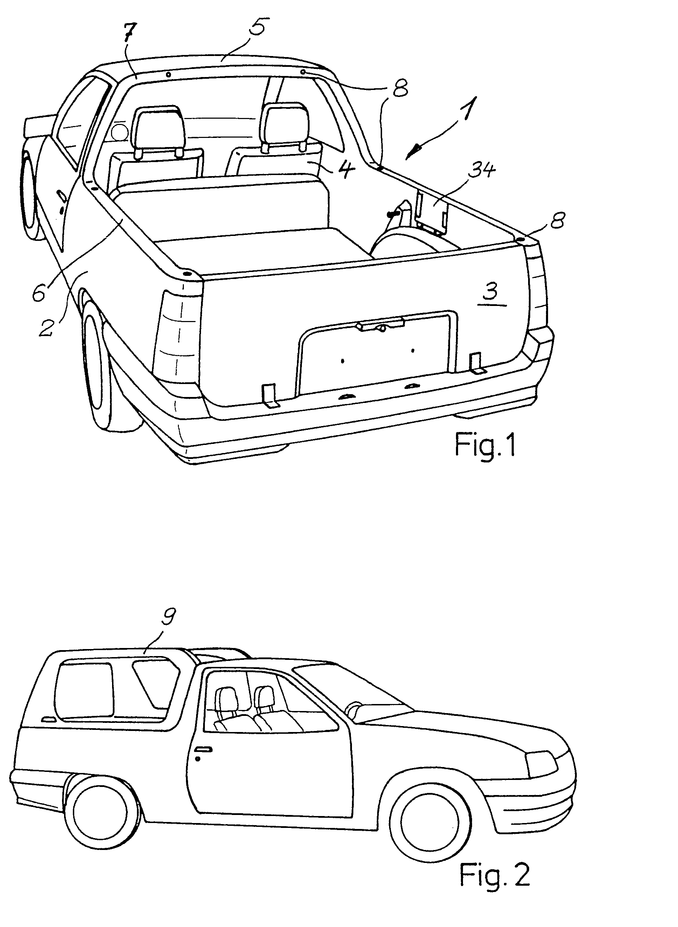

Das in Fig. 1 ersichtliche Basisfahrzeug 1 ist beispielsweise entstanden aus einem Pkw, bei dem der hintere Dachbereich hinter der B-Säule weggeschnitten wurde. Es verbleiben seitliche Bordwände 2 und eine Heckklappe 3, die an ihrem unteren Rand angelenkt ist. Im Bereich der Vordersitze 4 bleibt der vordere Dachaufbau 5.

Die freien Blechränder sind nach innen abgewinkelt und bilden im Bereich der Bordwände 2 jeweils eine Bordwandabwinkelung 6 und im Bereich des vorderen Dachaufbaus 5 eine Vorderdachabwinkelung 7. In diesen Abwinklungen sind mehrere Anschlußbeschläge 8 vorgesehen. Diese dienen zur Befestigung der verschiedenen mit dem Basisfahrzeug zur Verfügung gestellten Heckaufbauten.

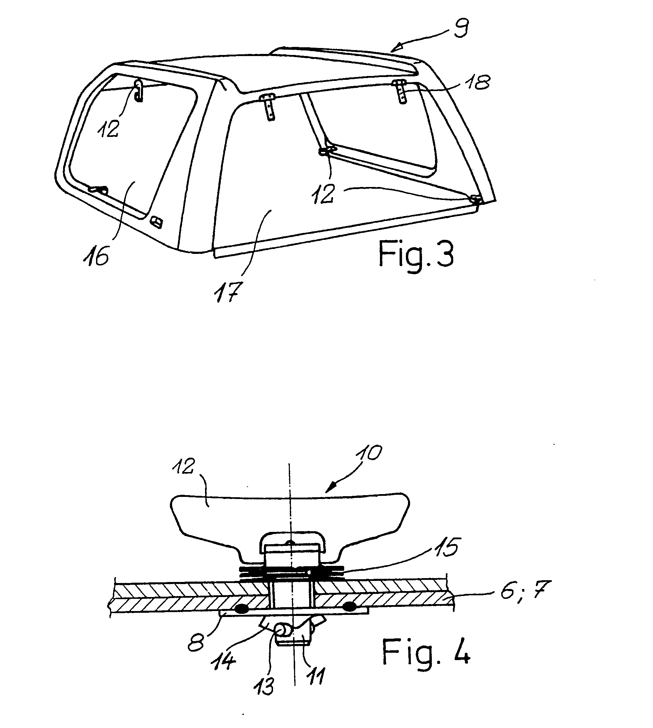

Ein solcher Heckaufbau ist der in Fig. 3 gezeigte starre Dachaufbau 9, mit dem das Fahrzeug zur in Fig. 2 gezeigten Kombiversion aufgerüstet wird. Die hierbei mit den Anschlußbeschlägen 8 zusammenwirkenden Knebelverschlüsse 10 sind aus Fig. 4 ersichtlich.

Jeder Knebelverschluß 10 besteht aus einem Schloßbolzen 11, an dessen hinterem Ende ein Knebelgriff 12 vorgesehen ist und in dessen vorderem Ende ein Querstift 13 steckt, welcher mit einem Kurvenstück 14 des Anschlußbeschlags 8 zusammenwirkt. Zwischen dem anzuschließenden Blech und dem Knebelgriff 12 ist eine Druckfeder, z.B. ein Tellerfederpaket 15 eingelegt, welches die Teile in der Schließstellung federnd zusammendrückt. Eine Vierteldrehung des Knebelgriffs 12 verbringt den Verschluß in bekannter Weise aus der Schließ- in die Offenstellung und umgekehrt.

In Fig. 3 sind einige der Griffe 12 der Knebelverschlüsse 10 ersichtlich, welche mit den Anschlußbeschlägen 8 des Basisfahrzeugs 1 gekoppelt werden. Ein zwischen den auf diese Weise zusammengedrückten Blechflächen eingelegter Dichtstreifen wird somit unter Druckspannung gehalten.

Fig. 3 zeigt weiterhin Seitenfenster 16 sowie eine an ihrem oberen Rand mittels Scharnieren 18 angelenkte Heckscheibe 17. Diese schafft in Verbindung mit der Heckklappe 3 des Basisfahrzeugs 1 eine gute Zugänglichkeit des Fahrzeugs in der Kombiversion von hinten.

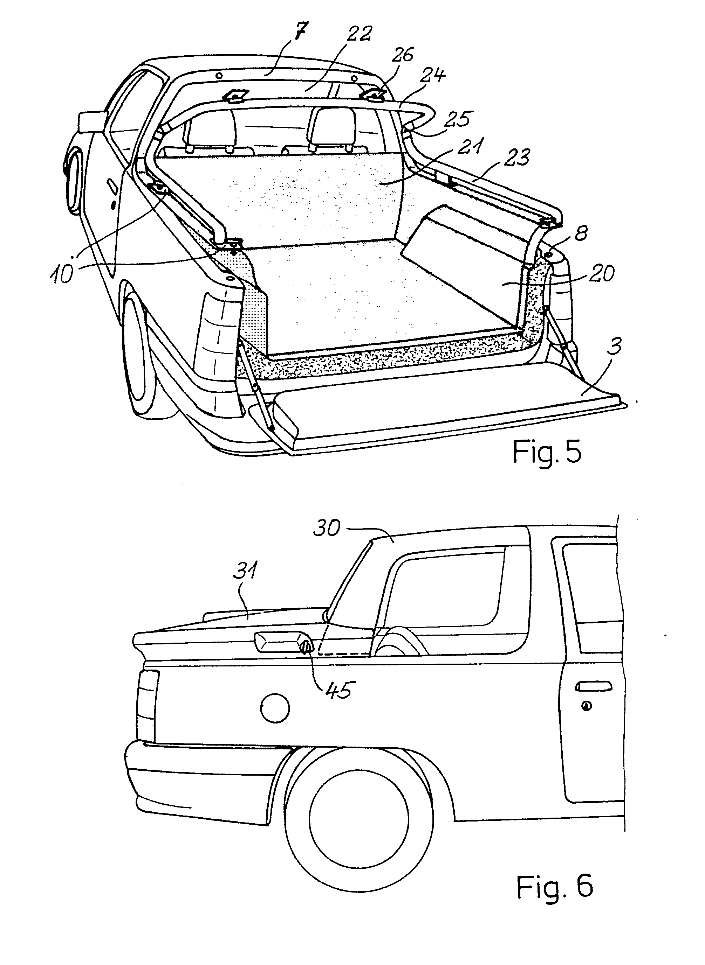

Fig. 5 zeigt die Umrüstung des Fahrzeugs zu einem Kleinlaster (Pickupversion) mittels eines wannenartigen Ladebehälters 20. Wegen der Radkästen der hinteren Fahrzeugräder geschieht das Einsetzen des Ladebehälters 20 von oben her mittels einer schwenkenden Apsetzbewegung. Der in endgültige Position gebrachte Ladebehälter 20 wird mittels der Knebelverschlüsse 10 an den Anschlußbeschlägen 8 des Basisfahrzeugs angeschlossen.

Die vordere Querwand 21 des Ladebehälters 20 bildet zusammen mit dem Rückfenster 22 den hinteren Abschluß der in dieser Version auf den Bereich der Vordersitze 4, beschränkten Fahrgastzelle. Das Rückfenster 22 kann einstückig mit dem Ladebehälter 20 verbunden sein, an diesem angelenkt sein oder auf dieses aufsetzbar sein.

Längs der oberen Ränder der Seitenwand des Ladebehälters 20 verlaufen Bordwandstangen 23, die beim Festzurren der Lasten dienlich sind. Sie setzen sich fort in einem Querbügel 24, mit dem sie mittels Gelenken 25 verbunden sind und der mittels Anschlußplatten 26 an der Vorderdachabwinklung 7 befestigbar ist. Dabei kann das Rückfenster 22 mit eingespannt werden.

Fig. 6 ff zeigen die wesentliche durch Umrüstung herstellbare Verwandlungsversion, und zwar in der Hardtopkonfiguration. Hier besteht der Heckaufbau aus einem in sich starren Dachelement 30 und einer Heckabdeckung 31. Beide Teile werden bei der Umrüstung schwenkbar am Basisfahrzeug befestigt.

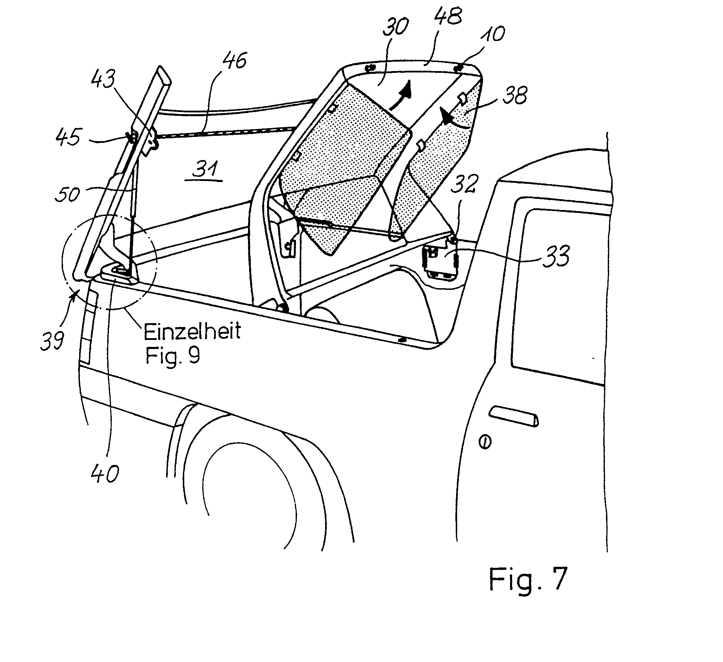

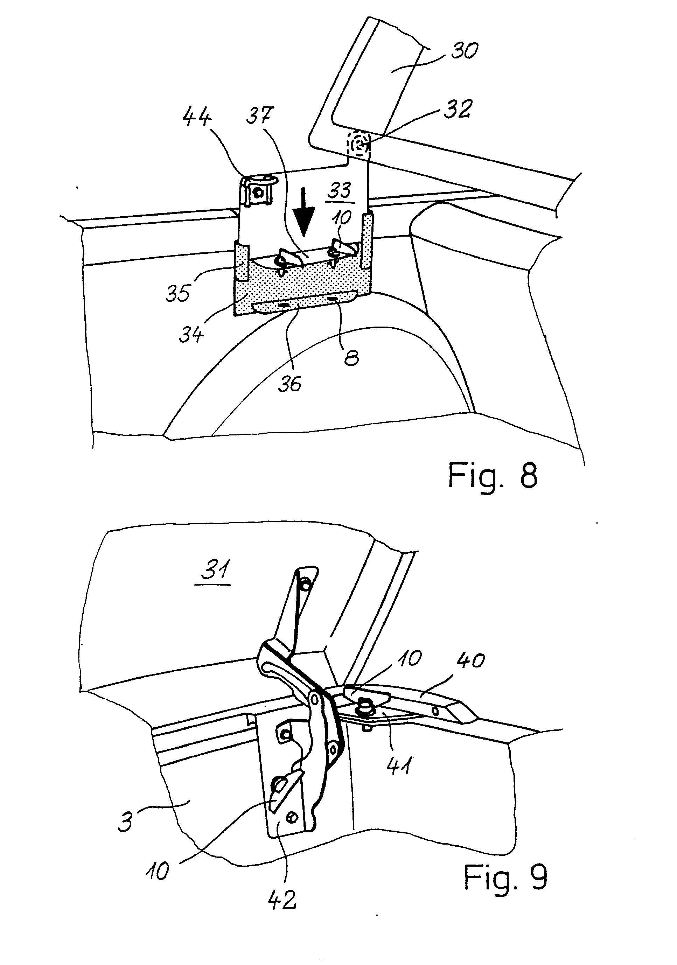

In Fig. 7 ist die Lage der Schwenkachsen ersichtlich. Am hinteren Ende des Dachelements 30 sind mittels Schwenkgelenken 32 Ankerplatten 33 drehbar verbunden. Diese Ankerplatten 33 sind in aus Fig. 8 ersichtliche Führungen 35 von Ankerplattenträgern 34 von oben her in Richtung des Pfeils einsetzbar. Die Ankerplattentrager 34 sind an der Innenseite der seitlichen Bordwände 2 hinter den Rücksitzlehnen befestigt.

Jeder Ankerplattenträger 34 hat eine etwa waagerecht vorstehende Anschlagplatte 36 mit Anschlußbeschlägen 8, und jede Ankerplatte 33 hat einen entsprechenden abgewinkelten unteren Fortsatz 37 mit passenden Knebelverschlüssen. Diese werden demgemäß nicht von großen Kräften beaufschlagt; die Kräfte werden vielmehr von den Führungen 35 aufgenommen.

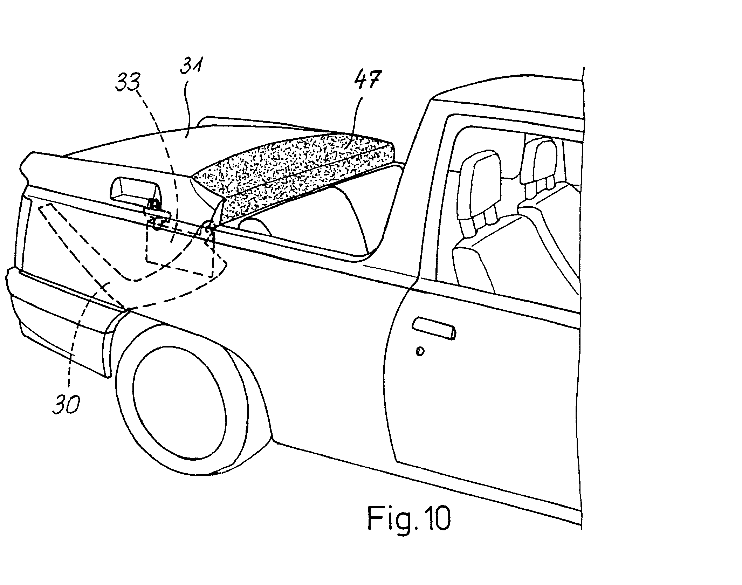

Das auf diese Weise schwenkbar befestigbare Dachelement 30 hat Heckseitenfenster 38, die an ihrem oberen Rand am Dachelement 30 angelenkt sind und, wie in Fig. 7 durch Pfeile angedeutet, bis zur Anlage an dieses angeschwenkt werden können. In dieser Form kann es vollständig nach hinten in den Bereich des Heckkofferraums abgesenkt werden, wie in Fig. 10 gestrichelt angedeutet.

Die Heckabdeckung 31 ist mittels einer den notwendigen Bewegungsablauf sicherstellenden Schwenkkinematik 39 mit einem Ankerbügel 40 verbunden, der seinerseits auf dem oberen Rand der Heckklappe 3 und einem angrenzenden Bereich der Bordwandabwinklung 6 befestigbar ist. Hierzu dienen wiederum Knebelverschlüsse 10 senkrechter Wirkungsrichtung, welche in einem Eckblech 41 im Winkel des Ankerbügels 40 sitzen und mit einem entsprechenden Anschlußbeschlag zusammenwirken.

Darüber hinaus sind am Ankerbügel 40 noch zwei senkrechte Ankerbleche 42 befestigt, welche mittels je eines Knebelverschlusse 10 waagerechter Wirkungsrichtung an der Heckklappe 3 des Fahrzeugs befestigbar sind. Eine solche Befestigung ergibt eine zuverlässige Aufnahme aller bei den Schwenkungen des Dachelements 30 wirkenden Kräfte.

Zur Niederhaltung der Heckabdeckung 31 in ihrer abgesenkten Stellung dienen seitliche Verriegelungsschlösser 43, die mit Ankerösen 44 zusammenwirken, welche an den Ankerplatten 33 des Dachelements 30 befestigt sind. Zur Betätigung dient ein Verriegelungsgriff 45, dessen Bewegung über ein Zugseil 46 auch auf das gegenüberliegende Verriegelungsschloß 43 übertragen wird, so daß beide Schlösser 43 der Heckabdeckung 31 von einer Person gleichzeitig entriegelt werden können, die dabei auch in der richtigen Position zum Hochschwenken derselben steht.

Es ist zu sehen, wie das zur Verwandlungsversion umgerüstete Fahrzeug von der Hardtopkonfiguration gemäß Fig. 6 in die Landaulettkonfiguration gemäß Fig. 10 verwandelt werden kann:

Zunächst ist die Heckabdeckung 31, wie in Fig. 7 ersichtlich, hochzuschwenken, worauf das Dachelement 30, nach hinten in die in Fig. 10 gestrichelt angedeutete Lage weggeschwenkt werden kann, und die Heckabdeckung 31 wieder in die Ausgangslage zurückgeschwenkt werden kann, in der ihre Verschlüsse 43 einrasten.

Schließlich wird die Öffnung zwischen dem vorderen Rand der Heckabdeckung 31 und dem oberen Rand der Rücksitzrückenlehnen mittels einer Persenning 47 abgedeckt.

**Patentansprüche**

1. Umrüstbarer Kraftwagen mit einer im Bereich der vorderen Sitzreihe (4) überdachten, nach hinten offenen Fahrgastzelle und mit mehreren Aufbaueinheiten (9; 20) für den verbleibenden Heckbereich, die mit dem Basisfahrzeug (1) mittels an diesem vorgesehener Anschlußbeschläge (8; 34) verbindbar sind, gekennzeichnet durch eine Aufbaueinheit in Form eines lösbar mit dem Basisfahrzeug verbundenen, schwenkbaren starren Dachelements (30) und einer ebenfalls lösbar mit dem Basisfahrzeug (1) verbundenen, schwenkbaren Heckabdeckung (31), wobei zur Verwandlung in eine Landaulettoder Kabriolettkonfiguration das Dachelement (30) in an sich bekannter Weise in den Raum unterhalb der Heckbereichsabdeckung (31) herunterschwenkbar ist.

2. Umrüstbarer Kraftwagen nach Anspruch 1, dadurch gekennzeichnet, daß die lösbare Schwenkverbindung des Dachelements (30) und der Heckabdeckung (31) mittels Ankerelementen (33; 40) erfolgt, die schwenkbar mit dem jeweiligen Schwenkteil (30; 31) verbunden sind und mittels Knebelverschlüssen (10) am Basisfahrzeug befestigbar sind.

3. Umrüstbarer Kraftwagen nach Anspruch 2, dadurch gekennzeichnet, daß die Ankerplatten (33) des Dachelements (30) in auf der Innenseite der seitlichen Bordwände (2) des Basisfahrzeugs befestigten, Ankerplattenträgern (34) etwa senkrecht nach unten einschiebbar sind.

4. Umrüstbarer Kraftwagen nach Anspruch 3, gekennzeichnet durch eine etwa rechtwinklig vom Ankerplattenträger (34) abstehende Anschlagplatte (36) mit Anschlußbeschlägen (8) sowie einem entsprechend rechtwinklig von der zugehörigen Ankerplatte (33) abgewinkelten Fortsatz (37) mit Knebelverschlüssen (10), die mit den Anschlußbeschlägen (8) zusammenwirken.

5. Umrüstbarer Kraftwagen nach einem der Ansprüche 1 bis 4, dadurch gekennzeichnet, daß die Heckseitenfenster (38) an ihrem oberen Rand einschwenkbar mit dem Dachelement (30) verbunden sind.

6. Umrüstbarer Kraftwagen nach einem der Ansprüche 1 bis 5, dadurch gekennzeichnet, daß die Heckabdeckung (31) schwenkbar mit einem Ankerbügel (40) verbunden ist, welcher seinerseits auf dem oberen Rand der Heckbordwand bzw. der Heckklappe (3) des Basisfahrzeugs befestigbar ist.

7. Umrüstbarer Kraftwagen nach Anspruch 6, dadurch gekennzeichnet, daß die Seitenschenkel des Ankerbügels (40) in den Bereich der Bordseitenwände (2) vorspringen und im konkaven Winkelbereich ein Eckblech (41) aufweisen, an dem ein Knebelverschluß (10) befestigt ist, der mit einem Anschlußbeschlag zusammenwirkt, welcher an einem entsprechenden Fahrzeugeckblech befestigt ist.

8. Umrüstbarer Kraftwagen nach einem der Ansprüche 6 oder 7, dadurch gekennzeichnet, daß im Bereich der Heckabdeckung-Schwenkkinematik (39) ein senkrechtes Ankerblech (42) vorgesehen ist, welches mittels eines Knebelverschlusses (10) mit etwa waagerechter Achse an der Heckbordwand bzw. der Heckklappe (3) des Basisfahrzeugs befestigbar ist.

9. Umrüstbarer Kraftwagen nach einem der vorhergehenden Ansprüche, gekennzeichnet durch wenigstens ein die Heckabdeckung (31) in ihrer Offenstellung haltendes Federelement, insbesondere eine Gasdruckfeder (50).

10. Umrüstbarer Kraftwagen nach einem der Ansprüche 2 bis 9, gekennzeichnet durch die Heckabdeckung (31) in ihrer geschlossenen Stellung haltende Verriegelungsschlösser (43), die mit Ankerösen (44) zusammenwirken, welche an den Ankerplatten (33) des Dachelements (30) befestigt sind.

11. Umrüstbarer Kraftwagen nach einem der vorhergehenden, Ansprüche, gekennzeichnet durch eine kinematische Verbindung der die Heckabdeckung (31) niederhaltenden Verriegelungsschlösser (43).

12. Umrüstbarer Kraftwagen nach Anspruch 11, gekennzeichnet durch ein die Verriegelungsschlösser (43) verbindendes Zugseil (46).

13. Umrüstbarer Kraftwagen nach einem der vorhergehenden Ansprüche, gekennzeichnet durch eine den Spalt zwischen dem vorderen Rand der Heckabdeckung (31) und dem oberen Rand der Rücksitzrückenlehnen abdeckende Persenning (47).

14. Umrüstbarer Kraftwagen nach einem der vorhergehenden Ansprüche, gekennzeichnet durch einen abgewinkelten Rand (48) am vorderen Ende des Dachelements (30), wobei dieser, Rand mittels in ihm angeordneter Knebelverschlüsse (10) zur dichtenden Anlage an einer Vorderdachabwinklung (7) gebracht wird.

15. Umrüstbarer Kraftwagen nach einem der vorhergehenden Ansprüche, gekennzeichnet durch einen starren, an die Anschlußbeschläge (8) des Basisfahrzeugs (1) unter Bildung einer durchgehenden Fahrgastzelle anschließbaren Dachaufbau (9).

16. Umrüstbarer Kraftwagen nach Anspruch 15, gekennzeichnet durch die Form eines Kombifahrzeugs.

17. Umrüstbarer Kraftwagen nach Anspruch 16, gekennzeichnet durch eine an ihrem oberen Rand schwenkbar mit dem Dachaufbau (9) verbundene Heckscheibe (17).

18. Umrüstbarer Kraftwagen nach einem der Ansprüche 1 bis 14, gekennzeichnet durch einen in den Heckbereich des Basisfahrzeugs einsetzbaren und an den verhandenen Anschlußbeschlägen (8) anschließbaren Ladebehälter (20).

19. Umrüstbarer Kraftwagen nach Anspruch 18, dadurch gekennzeichnet, daß die vordere Querwand (21) des Ladebehälters (20) zusammen mit einer einstückig mit diesem ausgebildeten oder an ihm angelenkten oder an diesen aufsetzbaren Rückfenster (22) den rückwärtigen Abschluß der auf die vordere Sitzreihe (4) beschränkten Fahrgastzelle bildet.

**Revendications**

1. Voiture automobile convertible comprenant une cellule d'habitacle couverte dans la zone de la rangée (4) des sièges avant et ouverte vers l'arrière et plusieurs unités modulaires (9; 20) destinées à la zone arrière restante et pouvant être rattachées au véhicule de base (1) au moyen de ferrures d'assemblage (8, 34) prévues sur celui-ci, caractérisée par une unité modulaire sous la forme d'un élément de pavillon (30) rigide et pivotable pouvant être raccordé de façon amovible au véhicule de base et d'un couvercle arrière (31) également pivotable et raccordé de façon amovible au véhicule de base (1), l'élément de pavillon (30) pouvant être escamoté de façon connue dans l'espace situé en-dessous du couvercle arrière (31) en vue de la conversion en une configuration landaulet ou cabriolet.

2. Voiture automobile convertible selon la revendication 1, caractérisée par le fait que le raccordement pivotable amovible de l'élément de pavillon, (30) et du couvercle arrière (31) s'effectue au moyen d'organes d'ancrage (33; 40) qui seront rattachés de façon pivotable à l'élément pivotant (30; 31) à chaque fois considéré et qui peuvent être fixés au véhicule de base au moyen d'attaches à oreilles (10).

3. Voiture automobile convertible selon la revendication 2, caractérisée par le fait que les plaques d'ancrage (33) de l'élément de pavillon (30) peuvent être enfoncées à peu près verticalement à partir du haut dans des supports (34) fixés sur la face interne des parois latérales (2) du véhicule de base.

4. Voiture automobile convertible selon la revendication 3, caractérisée par une plaque de butée (36) faisant saillie à peu près à angle droit par rapport au support (34) des plaques d'ancrage et comportant des ferrures d'assemblage (8) ainsi que par un appendice (37) coudé à angle droit par rapport à la plaque d'ancrage correspondante (33) et muni d'attaches à oreilles (10) coopérant avec les ferrures d'assemblage (8).

5. Voiture automobile convertible selon l'une des revendications 1 à 4, caractérisée par le fait que les fenêtres latérales arrière (38) sont raccordées au niveau de leur bord supérieur à l'élément de pavillon (30) de façon à pouvoir pivoter vers l'intérieur.

6. Voiture automobile convertible selon l'une des revendications 1 à 5, caractérisée par le fait que le couvercle arrière (31) est raccordé de façon pivotable à un étrier d'ancrage (40) qui peut lui même être fixé sur le bord supérieur de la paroi arrière ou du hayon (3) du véhicule de base.

7. Voiture automobile convertible selon la revendication 6, caractérisée par le fait que les branches latérales de l'étrier d'ancrage (40) font saillie dans la zone des parois latérales (2) et comportent dans la zone angulaire concave une tôle cornière (41) sur laquelle est fixée une attache à oreilles (10) qui coopère avec une ferrure d'assemblage, laquelle est fixée sur une tôle cornière correspondante du véhicule.

8. Voiture automobile convertible selon l'une des revendications 6 ou 7, caractérisée par le fait que dans la zone de la cinématique de pivotement (39) du couvercle arrière est prévue une tôle d'ancrage verticale (42) qui peut être fixée au moyen d'une attache à oreilles (10) à axe sensiblement horizontal sur la paroi arrière ou le hayon (3) du véhicule de base.

9. Voiture automobile convertible selon l'une des revendications précédentes, caractérisée par au moins un élément à ressort, en particulier à ressort à pression de gaz (50), maintenant le couvercle arrière (31) à sa position ouverte.

10. Voiture automobile convertible selon l'une des, revendications 2 à 9, caractérisée par des verrous (43) qui maintiennent le couvercle arrière (31) à sa position fermée et qui coopèrent avec des oeillets (44) fixés sur les plaques d'ancrage (33) de l'élément de pavillon (30).

11. Voiture automobile convertible selon l'une des revendications précédentes, caractérisée par une liaison cinématique des verrous (43) maintenant abaissé le couvercle arrière (31).

12. Voiture automobile convertible selon la revendication 11, caractérisée par un câble de traction (46) raccordant les verrous (43).

13. Voiture automobile convertible selon l'une des revendications précédentes, caractérisée par une toile à voiles (47) recouvrant la fente comprise entre le bord avant du couvercle arrière (31) et le bord supérieur des dossiers des sièges arrière.

14. Voiture automobile convertible selon l'une des revendications précédentes, caractérisée par un bord rabattu (48) à l'extrémité avant de l'élément de pavillon (30), ce bord venant s'appliquer de façon étanche par des attaches à oreilles incorporées (10) sur un bord rabattu (7) du pavillon avant.

15. Voiture automobile convertible selon l'une des revendications précédentes, caractérisée par un module rigide (9) formant pavillon et pouvant être raccordé aux ferrures d'assemblage (8) du véhicule de base (1) en vue de constituer une cellule d'habitacle continue.

16. Voiture automobile convertible selon la revendication 15, caractérisée par la forme d'un véhicule break.

17. Voiture automobile convertible selon la revendication 16, caractérisèe par une lunette arrière (17) qui, au niveau de son bord supérieur, est raccordée de façon pivotable au module (9) formant pavillon.

18. Voiture automobile convertible selon l'une des revendications 1 à 14, caractérisée par une caisse de chargement (20) pouvant être installée dans la zone arrière du véhicule de base et raccordée aux ferrures d'assemblage existantes (8).

19. Voiture automobile convertible selon la revendication 18, caractérisée par le fait que la paroi transversale avant (21) de la caisse de chargement (20), en liaison avec une fenêtre arrière (22) venue d'une seule pièce avec celle-ci, s'y articulant ou encore rapportée sur celle-ci, forme la paroi de fermeture arrière de la cellule d'habitacle limitée à la rangée de sièges avant (4).

**Claims**

1. A convertible motor vehicle with a passenger cabin which is covered in the region of the front row of seats (4) and open to the rear, and with a plurality of construction units (9; 20) for the remainder of the tail area, which units can be joined to the basic vehicle (1) by means of connection fittings (8; 34) provided thereon, characterised by having a construction unit in the form of a swivelling rigid roof member (30) releasably connected to the basic vehicle, and a swivelling tail deck (31) likewise releasably connected to the basic vehicle (1), the roof member (30) being adapted to be swung down into the compartment beneath the tail area deck (31) in a per se known manner for conversion into a landaulet or cabriolet configuration.

2. Convertible motor vehicle according to claim 1, characterised in that the releasable swivel connection of the roof member (30) and the tail deck (31) is effected by means of anchor members (33; 40) which are pivotably connected to the corresponding articulated part (30; 31) and can be fixed to the basic vehicle by means of toggle closures (10).

3. Convertible motor vehicle according to claim 2, characterised in that the anchor plates (33) of the roof member (30) are adapted to be pushed more or less vertically downwards into anchor plate brackets (34) fastened on the inside face of the lateral side walls (2) of the basic vehicle.

4. Convertible motor vehicle according to claim 3, characterised by having a stop plate (36) with connection fittings (8) which rises more or less at right angles from the anchor plate bracket (34) and a continuation piece (37) bent correspondingly back at right angles from the associated anchor plate (33) and having toggle closures (10) which cooperate with the connection fittings (8).

5. Convertible motor vehicle according to one of claims 1 to 4, characterised in that the rear side windows (38) are joined at their top edge to the roof member (30) so as to enable said windows to be swung inwards.

6. Convertible motor vehicle according to one of claims 1 to 5, characterised in that the tail deck (31) is pivotably connected to an anchor bracket (40), which in turn can be fastened on the top edge of the rear side wall or tail deck (3) of the basic vehicle.

7. Convertible motor vehicle according to claim 6, characterised in that the side legs of the anchor bracket (40) protrude into the region of the side walls (2) and in the concave angle region have a corner plate (41) on which is fastened a toggle closure (10) which cooperates with a connection fitting fastened on a corresponding corner plate of the vehicle.

8. Convertible motor vehicle according to one of claims 6 or 7, characterised in that in the region of the tail deck swivelling unit (39) there is provided a vertical anchor plate (42) which can be fastened by means of a toggle closure (10) with a more or less horizontal axis to the rear side wall or tail gate (3) of the basic vehicle.

9. Convertible motor vehicle according to one of the preceding claims, characterised by having at least one spring member, more particularly a pneumatic spring (50), which keeps the tail deck (31) in its open position.

10. Convertible motor vehicle according to one of claims 2 to 9, characterised by having latch-type locks (43) which keep the tail deck (31) in its closed position and cooperate with anchor eyes (44) which are fastened to the anchor plates (33) of the roof member (30).

11. Convertible motor vehicle according to one of the preceding claims, characterised by having kinematic linking of the latchtype locks (43) holding down the tail deck (31).

12. Convertible motor vehicle according to claim 11, characterised by having a tension cable (46) connecting the latch-type locks (43).

13. Convertible motor vehicle according to one of the preceding claims, characterised by having a canvas (47) covering the gap between the front edge of the tail deck (31) and the top edge of the rear squabs.

14. Convertible motor vehicle according to one of the preceding claims, characterised by having a backturned edge (48) at the front end of the roof member (30), said edge being brought to rest sealingly against a backturned edge (7) of the front roof by means of toggle closures (10) disposed in said edge.

15. Convertible motor vehicle according to one of the preceding claims, characterised by having a rigid roof construction (9) which can be affixed to the connection fittings (8) of the basic vehicle (1) to form a continuous passenger cabin.

16. Convertible motor vehicle according to claim 15, characterised by having the form of an estate vehicle.

17. Convertible motor vehicle according to claim 16, characterised by having a rear window (17) pivotably connected at its top edge to the roof construction (9).

18. Convertible motor vehicle according to one of claims 1 to 14, characterised by having a load bay (20) which can be inserted into the tail area of the basic vehicle and can be affixed to the existing connection fittings (8).

19. Convertible motor vehicle according to claim 18, characterised in that the front transverse wall (21) of the load bay (20) together with a rear window (22) which is integral therewith or hinged thereto or which can be placed thereonto forms the back end of the passenger cabin, which is confined to the front row of seats (4).

Fig.1

Fig. 2

Fig.3

Fig. 4

Fig. 5

Fig. 6

46

43

45

30 48 10

38

31

50

32

39

Einzelheit
Fig. 9

33

40

Fig. 7

4

Fig. 8

Fig. 9

Fig. 10